# EUROPÄISCHE PATENTSCHRIFT

(11) **EP 3 085 490 B1**
(45) Veröffentlichungstag und Bekanntmachung des Hinweises auf die Patenterteilung: **13.06.2018**
(21) Anmeldenummer: 16165035.3
(22) Anmeldetag: 13.04.2016
(51) Int. Cl.: B23Q 17/00

(54) **VORRICHTUNG ZUR ÜBERWACHUNG DER LAGE EINES WERKZEUGS ODER WERKZEUGTRÄGERS AN EINER ARBEITSSPINDEL**
DEVICE FOR MONITORING THE LOCATION OF A TOOL OR TOOL HOLDER ON A WORK SPINDLE
DISPOSITIF DE SURVEILLANCE DE LA POSITION D'UN OBJET OU D'UN PORTE-OUTIL SUR UN ARBRE MOTEUR

(30) Priorität: 21.04.2015 DE 102015106097
(43) Veröffentlichungstag der Anmeldung: 26.10.2016
(73) Patentinhaber: Ott-Jakob Spanntechnik GmbH, 87663 Lengenwang (DE)
(72) Erfinder: Greif, Josef, 87496 Friesenried (DE); Bonerz, Stefan, 87616 Marktoberdorf (DE); Aschauer, Florian, 83471 Schönau (DE)
(74) Vertreter: Charrier Rapp & Liebau

(56) Entgegenhaltungen:
- EP-A1- 1 537 946
- EP-A1- 2 156 924
- EP-A1- 2 272 627
- DE-A1-102007 048 121

## Beschreibung

Die Erfindung betrifft eine Vorrichtung zur Überwachung der Lage eines Werkzeugs oder Werkzeugträgers an einer Arbeitsspindel nach dem Oberbegriff des Anspruchs 1.

Eine derartige Vorrichtung ist aus der DE 10 2009 005 745 A1 bekannt. Als Sensor wird dort ein Mikrowellenresonator verwendet, bei dem ein Teil der Innenoberfläche durch einen Abschnitt der Oberfläche des Werkzeugs oder Werkzeugträgers gebildet wird, die bei korrekter Einspannung des Werkzeugs oder Werkzeugträgers in der Arbeitsspindel unmittelbar an einer als Werkzeuganlagefläche fungierenden Oberfläche der Arbeitsspindel anliegt. Bei einer Fehleinspannung, die insbesondere durch das Vorhandensein eines Spans im Bereich der Werkzeuganlagefläche der Arbeitsspindel verursacht werden kann, besteht zwischen den normalerweise unmittelbar aneinander anliegenden Oberflächen der Arbeitsspindel und des Werkzeugs oder Werkzeugträgers ein Spalt und somit ein Versatz der als Innenoberfläche des Mikrowellenresonators fungierenden Oberfläche des Werkzeugs oder Werkzeugträgers gegenüber ihrer regulären Position. Dieser Versatz bewirkt eine Verschiebung der Resonanzfrequenz des Mikrowellenresonators, die anhand einer Reflexionsmessung detektiert werden kann.

Diese bekannte Vorrichtung funktioniert zuverlässig, erfordert aber die Anbringung von Bohrungen in der Arbeitsspindel, die sich von der Werkzeuganlagefläche an der Frontseite der Arbeitsspindel aus axial in die Arbeitsspindel hinein erstrecken. Solche Bohrungen können durch Späne oder Schmierflüssigkeit verunreinigt werden, was die Genauigkeit der Messungen beeinträchtigen kann. Um dies zu vermeiden, müssen sie mit einem Dielektrikum gefüllt werden, was aber einen zusätzlichen Aufwand bedeutet.

In Anbetracht dieses Standes der Technik ist es die Aufgabe der Erfindung, eine Vorrichtung zur Überwachung der Lage eines Werkzeugs oder Werkzeugträgers an einer Arbeitsspindel zu schaffen, die keine Bohrungen in der Arbeitsspindel von deren frontseitiger Werkzeuganlagefläche aus erfordert.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Erfindungsgemäß ist bei einer gattungsgemäßen Überwachungsvorrichtung der Sensor ein Ultraschallsensor, der im Inneren der Arbeitsspindel an einer Oberfläche des Körpers der Arbeitsspindel angeordnet und dazu eingerichtet ist, in den Körper der Arbeitsspindel ein sich im Körper der Arbeitsspindel in Richtung der zur planparallelen Anlage einer ebenen Oberfläche des Werkzeugs oder Werkzeugträgers in dessen gespanntem Zustand vorgesehenen ebenen Oberfläche der Arbeitsspindel ausbreitendes Ultraschallsignal einzukoppeln, aus dem Körper der Arbeitsspindel ein Reflexionssignal zu empfangen, und aus dem Reflexionssignal das Messsignal abzuleiten. Bei dieser Art der Plananlagenmessung besteht keine Notwendigkeit zur Anbringung von Bohrungen in der frontseitigen Plananlagefläche der Arbeitsspindel.

Bevorzugt liegt die Oberfläche des Körpers der Arbeitsspindel im Inneren der Arbeitsspindel, an welcher der Ultraschallsensor angeordnet ist, parallel zu der ebenen Oberfläche an der Frontseite der Arbeitsspindel zur planparallelen Anlage einer ebenen Oberfläche des Werkzeugs oder Werkzeugträgers in dessen gespanntem Zustand. In diesem Fall ist der Unterschied in im Reflexionsverhalten des Werkzeugs oder Werkzeugträgers zwischen einer korrekten Plananlage und einer fehlerhaften Anlage besonders ausgeprägt.

Vorteilhafterweise beinhaltet der Ultraschallsensor eine Einrichtung zur Messung der Laufzeit eines von ihm ausgesendeten und zu ihm zurück reflektierten Ultraschallsignals, das von ihm ausgegebene Messsignal beinhaltet eine Information über die gemessene Laufzeit und die Vorrichtung weist eine Messeinrichtung mit einem Vergleicher zum Vergleich der Laufzeit mit einem Zeitschwellwert auf, welche eine fehlerhafte Anlage des Werkzeugs oder Werkzeugträgers an der Arbeitsspindel dann anzeigt, wenn die Laufzeit unter dem Zeitschwellwert liegt. Diese Signallaufzeit hängt nämlich stark davon ab, ob das Werkzeug oder der Werkzeugträger korrekt an der Arbeitsspindel anliegt oder ein Spalt vorhanden ist.

Zweckmäßig ist es ferner, wenn der Ultraschallsensor eine Einrichtung zur Messung der Amplitude eines von ihm ausgesendeten und zu ihm zurück reflektierten Ultraschallsignals beinhaltet, das von ihm ausgegebene Messsignal eine Information über die gemessene Amplitude beinhaltet und die Vorrichtung eine Messeinrichtung mit einem Vergleicher zum Vergleich der Amplitude mit einem Amplitudenschwellwert aufweist, welche eine fehlerhafte Anlage des Werkzeugs oder Werkzeugträgers an der Arbeitsspindel dann anzeigt, wenn die Amplitude über dem Amplitudenschwellwert liegt. Auch diese Amplitude hängt nämlich stark von der Anlage des Werkzeugs oder Werkzeugträgers an der Arbeitsspindel ab. Die beiden Kriterien können auch so miteinander verknüpft werden, dass eine fehlerhafte Anlage bereits dann erkannt wird, wenn mindestens eines davon erfüllt ist, wodurch eine fehlerhafte Anlage besonders sicher erkannt werden kann. Alternativ könnten die beiden Kriterien auch so miteinander verknüpft werden, dass eine fehlerhafte Anlage nur dann erkannt wird, wenn beide erfüllt sind, wodurch eine unzutreffende Erkennung einer fehlerhaften Anlage zuverlässig vermieden werden kann.

Sinnvollerweise ist die Messeinrichtung außerhalb der Arbeitsspindel angeordnet. In diesem Fall ist sie erfindungsgemäß bevorzugt mit einem Koppler verbunden und auch der Ultraschallsensor ist über eine Schnittstelleneinheit mit einem Koppler verbunden, so dass das Messsignal von dem Ultraschallsensor über die Schnittstelleneinheit und den Koppler drahtlos über einen Luftspalt zwischen der Arbeitsspindel und einem Stator hinweg zur dem anderen Koppler und weiter zu der Messeinrichtung übertragen werden kann.

In der Arbeitsspindel ein Energiespeicher zur Versorgung des Ultraschallsensors und der Schnittstelleneinheit vorgesehen, der bevorzugt aus der Energie eines von der Messeinrichtung über die Koppler zu der Schnittstelleneinheit übertragenen Signals aufladbar ist. Hierdurch wird eine Erschöpfung des Energiespeichers, die einen regelmäßigen Austausch desselben erfordern würde, vermieden. Der Ultraschallsensor, die Schnittstelleneinheit, der Koppler und der Energiespeicher bilden dann insgesamt einen in der Arbeitsspindel angeordneten Transponder, aus dem von der Messeinrichtung über den anderen Koppler das von der Lage des Werkzeugs oder Werkzeugträgers bezüglich der Arbeitsspindel abhängige Messsignal auslesbar ist.

Nachfolgend wird ein Ausführungsbeispiel der Erfindung unter Bezugnahme auf die Zeichnungen beschrieben. In diesen zeigt
- Fig. 1: eine mit einer erfindungsgemäßen Überwachungsvorrichtung ausgerüstete Arbeitsspindel mit einem regulär anliegenden Werkzeugträger in einer teilweise geschnittenen Seitenansicht und
- Fig. 2: die Anordnung von Fig. 1, jedoch mit einem durch einen eingeklemmten Span verursachten Spalt zwischen der Arbeitsspindel und dem Werkzeugträger.

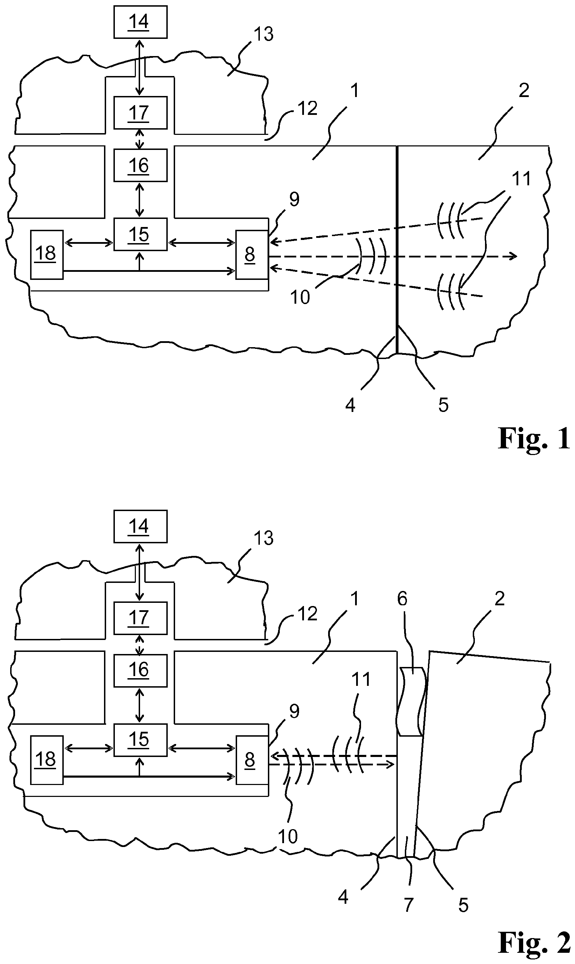

Fig. 1 zeigt eine teilweise geschnittene Seitenansicht einer Arbeitsspindel 1 mit einem Werkzeugträger 2, in dem ein nicht dargestelltes Werkzeug aufgenommen ist. Die Arbeitsspindel 1 ist Bestandteil einer ebenfalls nicht dargestellten Bearbeitungsmaschine, insbesondere einer Werkzeugmaschine. Die Arbeitsspindel 1 weist an ihrer Stirnseite eine ringförmige ebene Oberfläche 4 auf, an welcher eine ebenfalls ringförmige ebene Oberfläche 5 des Werkzeugträgers 2 im korrekt in der Arbeitsspindel 1 gespannten Zustand des Werkzeugträgers 2 plan anliegt. Beide ebenen Oberflächen 4 und 5 verlaufen dann senkrecht zu der in Fig. 1 nicht sichtbaren, waagrechten verlaufenden Drehachse der Arbeitsspindel 1 und es besteht kein Abstand zwischen diesen Oberflächen 4 und 5. Die Verwendung eines Werkzeugträgers 2 ist optional. Es könnte auch das hintere Ende eines Werkzeugs so geformt sein, dass es unmittelbar in der Arbeitsspindel 1 gespannt werden kann.

Wie in Fig. 2 dargestellt ist, wird durch eine Verschmutzung zwischen den ebenen Anlageflächen 4 und 5, die insbesondere durch einen bei der Bearbeitung eines Werkstücks entstandenen Span 6 erfolgen kann, der flächige Kontakt der Anlageflächen 4 und 5 miteinander verhindert und ein Spalt 7 verursacht, der in der Regel keilförmig sein wird, so dass der Werkzeugträger 2 und folglich auch das Werkzeug gegenüber seiner korrekten Lage bezüglich der Drehachse der Arbeitsspindel 1 gekippt ist, wie es in Fig. 2 dargestellt ist. Bei der Bearbeitung eines Werkstücks mit einem solchermaßen schrägstehenden Werkzeug ist kein maßhaltiges Ergebnis, sondern Ausschuss zu erwarten.

Um die korrekte Lage des Werkzeugträgers 2 gegenüber der Arbeitsspindel 1 zu überwachen, ist erfindungsgemäß vorgesehen, dass im Inneren der Arbeitsspindel 1 ein Ultraschallsensor 8 an einer inneren Oberfläche 9 angeordnet ist, welche der äußeren Oberfläche 4 parallel gegenüber liegt. Der Ultraschallsensor 8 umfasst einen Ultraschall-Transceiver, auch als Ultraschall-Frontend bezeichnet, sowie mindestens einen elektromechanischen Ultraschallwandler. Beide Arten von Bausteinen sind auf dem Markt verfügbar. Der Transceiver regt den Ultraschallwandler in Abhängigkeit von Steuersignalen, mit denen er beaufschlagt wird, zur Aussendung von Ultraschallwellen an und gibt elektrische Messsignale ab, die er aus von dem Ultraschallwandler empfangenen Ultraschallwellen ableitet. Es können auch zwei getrennte Ultraschallwandler zum Senden und Empfangen vorgesehen sein. Die von dem Ultraschallsensor 8 ausgesandten Ultraschallsignale sind einzelne Impulse kurzer Dauer, die eine Laufzeitmessung zwischen der Aussendung und dem Empfang eines Echos erlauben. Aufgrund seiner Anordnung an der inneren Oberfläche 9 der Arbeitsspindel 1 breiten sich die von dem Ultraschallsensor 8 ausgesandten Ultraschallwellen 10 in dem Körper der Arbeitsspindel 1 in Richtung der Oberfläche 4 der Arbeitsspindel 1 aus.

Im Fall einer korrekten Anlage des Werkzeughalters 2 an der Arbeitsspindel 1, wie sie in Fig. 1 gezeigt ist, findet an der Grenze zwischen den planparallel aneinander anliegenden Oberflächen 4 und 5 der Arbeitsspindel 1 und des Werkzeughalters 2 nahezu keine Reflexion statt, da die Arbeitsspindel 1 und der Werkzeughalter 2 aus dem gleichen Material, nämlich Stahl bestehen und somit gleiche Ausbreitungseigenschaften für die Ultraschallwellen 10 haben. Die Ultraschallwellen 10 breiten sich somit weiter in den Werkzeughalter 2 und in das in ihm aufgenommene Werkzeug hinein aus. An äußeren Oberflächen des Werkzeughalters 2 und des Werkzeugs, die in Fig. 1 nicht dargestellt sind kommt es dann aufgrund der von Metall stark abweichenden Ausbreitungseigenschaften von Luft für Ultraschallwellen zur Reflexion der Ultraschallwellen 10, wobei es sich aufgrund der gewölbten bzw. zerklüfteten Oberflächenformen des Werkzeughalters 2 und des Werkzeugs um eine diffuse Reflexion handelt. Reflektierte Ultraschallwellen 11 gelangen daher aus einer Vielzahl verschiedener Richtungen zurück zu dem Ultraschallsensor 8.

Im Gegensatz dazu erfolgt bei einer fehlerhaften Anlage des Werkzeughalters 2, d.h. bei Vorhandensein eines Spalts 7 zwischen der Arbeitsspindel 1 und dem Werkzeughalter 2 eine Reflexion der ausgesandten Ultraschallwellen 10 bereits an der stirnseitigen Oberfläche 4 der Arbeitsspindel 1. Die Reflexion ist in diesem Fall wegen der Parallelität der Oberflächen 9 und 4 direkt zu dem Ultraschallsensor 8 zurück gerichtet und die reflektierten Ultraschallwellen 11 gelangen aufgrund der kürzeren Entfernung zwischen den Oberflächen 4 und 9 schneller zurück zu dem Ultraschallsensor 8. Aufgrund der kürzeren Laufstrecke ist die Dämpfung in diesem Fall geringer und die Amplitude der an dem Ultraschallsensor 8 eintreffenden reflektierten Ultraschallwellen 11 somit größer. Beide Unterschiede, nämlich die kürzere Laufzeit und die größere Amplitude des Reflexionssignals, sind klare Indizien für das Vorhandensein eines Spalts 7 zwischen der Arbeitsspindel 1 und dem Werkzeughalter 2, d.h. für eine fehlerhafte Anlage des Werkzeughalters 2.

Da sich die Arbeitsspindel 1 im Betrieb mit hoher Drehzahl dreht, müssen die Messsignale des Ultrasschallsensors 8 drahtlos über den Luftspalt 12 zwischen der Arbeitsspindel 1 und dem Stator 13, in dem die Arbeitsspindel 1 drehbar gelagert ist, zu einer externen elektronischen Messeinrichtung 14 übertragen werden. In der umgekehrten Richtung müssen auch Steuersignale von der Messeinrichtung 14 zu dem Ultraschallsensor 8 übertragen werden, um die Durchführung von Reflexionsmessungen auszulösen. Hierzu ist der Ultraschallsensor 8 mit einer Schnittstelleneinheit 15 verbunden, welche ihrerseits mit einem in der Arbeitsspindel 1 unmittelbar an dem Luftspalt 12 angeordneten Koppler 16 verbunden ist. Radial gegenüberliegend ist an derselben axialen Stelle in dem Stator 13 unmittelbar an dem Luftspalt 12 ein gleichartiger Koppler 17 angeordnet, welcher mit der Messeinrichtung 14 verbunden ist.

Die Koppler 16 und 17 können beispielsweise induktive Koppler mit Spulen sein, die sich um den gesamten Umfang der Arbeitsspindel 1 bzw. des Stators 13 herum erstrecken. Solche induktiven Koppler werden beispielsweise in der DE 42 01 013 A1 zur Übertragung von Messsignalen zwischen einer drehenden Arbeitsspindel und einem Stator vorgeschlagen. Alternativ hierzu könnten auch kapazitive Koppler Verwendung finden. Es können aber auch Antennen für die Aussendung und den Empfang hochfrequenter elektromagnetische Wellen eingesetzt werden, die nur jeweils an einer bestimmten Position des Umfangs der Arbeitsspindel 1 bzw. des Stators 13 angeordnet sind und sich einander bei jeder Umdrehung der Arbeitsspindel 1 nur einmal kurzzeitig an dem Luftspalt 12 gegenüberliegen. Solche Antennen werden zu einem ähnlichen Zweck beispielsweise in der DE 10 2013 100 979 B3 vorgeschlagen. Die Übertragung könnte auch optisch erfolgen, wobei die Sende- und Empfangsdioden nicht direkt an dem Luftspalt 12 angeordnet sein müssten, sondern auch Lichtwellenleiter zur Signalführung an den Luftspalt 12 verwendet werden könnten.

Die Messeinrichtung 14 kommuniziert über die Koppler 17 und 16 drahtlos mit der Schnittstelleneinheit 15, d.h. sie sendet an diese Steuersignale zur Auslösung von Messungen und empfängt von ihr die von dem Ultraschallsensor 8 gelieferten Messsignale. Die Schnittstelleneinheit 15 empfängt von der Messeinrichtung 14 Steuersignale, löst abhängig von diesen Steuersignalen Messungen durch den Ultraschallsensor 8 aus und bereitet die von dem Ultraschallsensor 8 gelieferten Messsignale zur Übertragung zu der Messeinrichtung 14 über die Koppler 16 und 17 auf.

Da es sich bei dem Ultraschallsensor 8 und der Schnittstelleneinheit 15 jeweils um aktive Einheiten handelt, welche zu ihrem Betrieb mit elektrischer Leistung versorgt werden müssen, ist in der Arbeitsspindel 1 ein Energiespeicher 18 vorgesehen, welcher den Ultraschallsensor 8 und die Schnittstelleneinheit 15 mit elektrischer Leistung versorgt. Bei dem Energiespeicher 18 kann es sich im einfachsten Fall um eine Batterie handeln, die in gewissen Zeitabständen ausgetauscht werden muss, wobei die Schnittstelleneinheit 15 in diesem Fall den Ladezustand überwachen und der Messeinrichtung 14 einen niedrigen Ladezustand, der einen baldigen Austausch des Energiespeichers 18 erfordert, melden kann.

Vorzugsweise handelt es sich aber bei dem Energiespeicher 18 um einen aufladbaren Energiespeicher, der von der Schnittstelleneinheit 15 aus der Leistung eines Signals, welches diese über die Koppler 17 und 16 von der Messeinrichtung 14 empfängt, geladen wird. Für die Messeinrichtung 14 wirken die Schnittstelleneinheit 14, der Energiespeicher 18 und der Ultraschallsensor 8 in dieser Ausführungsform somit insgesamt als ein Transponder, dem die zu seinem Betrieb erforderliche Leistung von der Messeinrichtung 14 aus über die Koppler 17 und 16 drahtlos in Form elektromagnetischer Wellen zugeführt wird. Ein von der Messeinrichtung 14 an die Schnittstelleneinheit 15 zu sendendes Auslösesignal zur Auslösung einer Messung durch den Ultraschallsensor 8 kann sich von dem Signal zum Laden des Energiespeichers 18 beispielsweise in der Frequenz unterscheiden. Die grundsätzliche Funktionsweise eines Transponders ist in Fachkreisen bekannt und bedarf daher hier keiner weiteren Erläuterung.

Wie bereits vorausgehend erwähnt, unterschieden sich die von dem Ultraschallsensor 8 auf einen Sendeimpuls hin empfangenen Reflexionssignale im Fall der korrekten Anlage des Werkzeughalters 2 an der Arbeitsspindel 1 entsprechend Fig. 1 vom Fall einer fehlerhaften Anlage mit einem Spalt 6 zwischen dem Werkzeughalter 2 und der Arbeitsspindel 1 entsprechend Fig. 2 sowohl durch eine längere Laufzeit, als auch durch eine geringere Amplitude. Als Entscheidungskriterium für das Vorliegen einer fehlerhaften Anlage kann somit nur die Signallaufzeit des Reflexionssignals allein oder nur die Amplitude des Reflexionssignals allein oder eine Kombination von Laufzeit und Amplitude herangezogen werden. Im Rahmen einer Kalibrierung können entsprechende Referenzsignale bei korrekter Anlage und bei Vorhandensein eines Spalts definierter Breite aufgezeichnet und anhand dieser Entscheidungsschwellen zur Erkennung einer fehlerhaften Anlage für die Laufzeit und die Amplitude des Reflexionssignals festgelegt und in einem Speicher der Messeinrichtung 14 gespeichert werden.

Die Darstellung des Hohlraumes in der Arbeitsspindel 1 in den Figuren 1 und 2 ist rein schematisch zu verstehen, d.h. der Hohlraum muss keineswegs die dort gezeigte Form haben. Vielmehr könnte er sich beispielsweise auch rein radial in die Arbeitsspindel 1 hinein erstrecken und die Komponenten 8, 15, 16 und 18 könnten dementsprechend in einer rein radialen Abfolge angeordnet sein. Wesentlich ist nur, dass der Hohlraum nicht bis zu der frontseitigen Oberfläche 4 der Arbeitsspindel 1 reicht, also diese Oberfläche 4 keine Öffnung zu dem Hohlraum aufweist.

## Patentansprüche

1. Vorrichtung zur Überwachung der Lage eines Werkzeugs oder Werkzeugträgers (2) an einer Arbeitsspindel (1), insbesondere in einer Bearbeitungsmaschine, wobei die Arbeitsspindel (1) an ihrer Frontseite eine ebene Oberfläche (4) zur planparallelen Anlage einer ebenen Oberfläche (5) des Werkzeugs (2) oder Werkzeugträgers (2) in dessen gespanntem Zustand aufweist, und wobei in der Arbeitsspindel (1) mindestens ein Sensor angeordnet ist, welcher ein von der Lage des Werkzeugs oder Werkzeugträgers (2) bezüglich der Arbeitsspindel (1) abhängiges Messsignal abgibt, **dadurch gekennzeichnet, dass** der Sensor ein Ultraschallsensor (8) ist, der im Inneren der Arbeitsspindel (1) an einer Oberfläche (9) des Körpers der Arbeitsspindel (1) angeordnet und dazu eingerichtet ist, in den Körper der Arbeitsspindel (1) ein sich im Körper der Arbeitsspindel (1) in Richtung der ebenen Oberfläche (4) ausbreitendes Ultraschallsignal einzukoppeln, aus dem Körper der Arbeitsspindel (1) ein Reflexionssignal zu empfangen, und aus dem Reflexionssignal das Messsignal abzuleiten und an einem Ausgang auszugeben.

2. Vorrichtung nach Anspruch 1, **dadurch gekennzeichnet, dass** die Oberfläche (9) des Körpers der Arbeitsspindel (1) im Inneren der Arbeitsspindel (1), an welcher der Ultraschallsensor (8) angeordnet ist, parallel zu der ebenen Oberfläche (4) an der Frontseite der Arbeitsspindel (1) zur planparallelen Anlage einer ebenen Oberfläche (5) des Werkzeugs (2) oder Werkzeugträgers (2) in dessen gespanntem Zustand liegt.

3. Vorrichtung nach Anspruch 1 oder 2, **dadurch gekennzeichnet, dass** sie eine Messeinrichtung (14) aufweist, welche das von dem Ultraschallsensor (8) abgegebene Messsignal auswertet, anhand mindestens eines Parameters des Messsignals die Korrektheit der Werkzeuganlage bewertet und eine fehlerhafte Werkzeuganlage anzeigt.

4. Vorrichtung nach einem der Ansprüche 1 bis 3, **dadurch gekennzeichnet, dass** der Ultraschallsensor (8) eine Einrichtung zur Messung der Laufzeit eines von ihm ausgesendeten und zu ihm zurück reflektierten Ultraschallsignals beinhaltet und das von ihm ausgegebene Messsignal eine Information über die gemessene Laufzeit beinhaltet, und dass die Vorrichtung eine Messeinrichtung (14) mit einem Vergleicher zum Vergleich der Laufzeit mit einem Zeitschwellwert aufweist, welche eine fehlerhafte Anlage des Werkzeugs oder Werkzeugträgers (2) an der Arbeitsspindel (1) dann anzeigt, wenn die Laufzeit unter dem Zeitschwellwert liegt.

5. Vorrichtung nach einem der Ansprüche 1 bis 4, **dadurch gekennzeichnet, dass** der Ultraschallsensor (8) eine Einrichtung zur Messung der Amplitude eines von ihm ausgesendeten und zu ihm zurück reflektierten Ultraschallsignals beinhaltet und das von ihm ausgegebene Messsignal eine Information über die gemessene Amplitude beinhaltet, und dass die Vorrichtung eine Messeinrichtung (14) mit einem Vergleicher zum Vergleich der Amplitude mit einem Amplitudenschwellwert aufweist, welche eine fehlerhafte Anlage des Werkzeugs oder Werkzeugträgers (2) an der Arbeitsspindel (1) dann anzeigt, wenn die Amplitude über dem Amplitudenschwellwert liegt.

6. Vorrichtung nach einem der Ansprüche 3 bis 5, **dadurch gekennzeichnet, dass** die Messeinrichtung (14) außerhalb der Arbeitsspindel (1) angeordnet und mit einem ersten Koppler (17) verbunden ist, dass der Ultraschallsensor (8) über eine Schnittstelleneinheit (15) mit einem zweiten Koppler (16) verbunden ist, und dass das Messsignal von dem Ultraschallsensor (8) über die Schnittstelleneinheit (15) und den zweiten Koppler (16) drahtlos über einen Luftspalt (12) zwischen der Arbeitsspindel (1) und einem Stator (13) hinweg zu dem ersten Koppler (17) und weiter zu der Messeinrichtung (14) übertragen wird.

7. Vorrichtung nach Anspruch 6, **dadurch gekennzeichnet, dass** in der Arbeitsspindel ein Energiespeicher (18) zur Versorgung des Ultraschallsensors (8) und der Schnittstelleneinheit (15) vorgesehen ist, der aus der Energie eines von der Messeinrichtung (14) über die Koppler (17, 16) zu der Schnittstelleneinheit (15) übertragenen Signals aufladbar ist.

8. Vorrichtung nach Anspruch 7, **dadurch gekennzeichnet, dass** der Ultraschallsensor (8), die Schnittstelleneinheit (15), der zweite Koppler (16) und der Energiespeicher (18) insgesamt einen in der Arbeitsspindel angeordneten Transponder bilden, aus dem von der Messeinrichtung (14) über den ersten Koppler (17) das von der Lage des Werkzeugs oder Werkzeugträgers (2) bezüglich der Arbeitsspindel (1) abhängige Messsignal auslesbar ist.

## Claims

1. Device for monitoring the position of a tool or tool carrier (2) on a work spindle (1), in particular in a processing machine, wherein the work spindle (1) has on its front side, a flat surface (4) for plane-parallel support of a flat surface (5) of the tool (2) or tool carrier (2) in its clamped state, and wherein in the work spindle (1) is arranged at least one sensor which delivers a measurement signal which is dependent on the position of the tool or tool carrier (2) with regard to the work spindle (1), **characterised in that** the sensor is an ultrasound sensor (8) which is arranged in the interior of the work spindle (1) on a surface (9) of the body of the work spindle (1) and equipped to couple an ultrasound signal being propagated in the body of the work spindle (1) in the direction of the flat surface (4)into the body of the work spindle (1) to receive from the body of the work spindle (1) a reflection signal, and to derivefrom the reflection signal the measurement signal and to distribute it to an output.

2. Device according to claim 1, **characterised in that** the surface (9) of the body of the work spindle (1) lies in the interior of the work spindle (1), on which the ultrasound sensor (8) is arranged, parallel to the flat surface (4) on the front side of the work spindle (1) for plane-parallel support of a flat surface (5) of the tool (2) or tool carrier (2) in its clamped state.

3. Device according to claim 1 or 2, **characterised in that** it has a measuring device (14), which evaluates the measurement signal delivered by the ultrasound sensor (8), assesses the correctness oftool supportusing at least one parameter of the measurement signal and indicates adefectivetool support.

4. Device according to one of claims 1 to 3, **characterised in that** the ultrasound sensor (8) comprises a device for measuring the transit time of an ultrasound signal emitted by it and reflected back to it and the measurement signal emitted by it comprises information about the measured transit time, and **in that** the device has a measuring device (14) with a comparator to compare the transit time with a time threshold value which indicates a defective support of the tool or tool carrier (2) on the work spindle (1) if the transit time lies below the time threshold value.

5. Device according to one of claims 1 to 4, **characterised in that** the ultrasound sensor (8) comprises a device for measuring the amplitude of an ultrasound signal emitted by it and reflected back to it and the measuredsignal emitted by it comprises information about the measured amplitude, and **in that** the device has a measuring device (14) with a comparator to compare the amplitude with an amplitude threshold value which indicates a defective support of the tool ortool carrier (2) on the work spindle (1) if the amplitude lies above the amplitudethreshold value.

6. Device according to one of claims 3 to 5, **characterised in that** the measuring device (14) is arranged outside of the work spindle (1) and connected to a first coupler (17), **in that** the ultrasound sensor (8) is connected to a second coupler (16) via an interface unit (15), and **in that** the measurement signal is transmitted from the ultrasound sensor (8) via the interface unit (15) and the second coupler (16) in wireless manner via an air gap (12) between the work spindle (1) and a stator (13) to the first coupler (17) and further to the measuring device (14).

7. Device according to claim 6, **characterised in that** an energy store (18) to supply the ultrasound sensor (8) and the interface unit (15) is provided in the work spindle and can be charged from the energy of a signal transmitted from the measuring device (14) via the couplers (17, 16) to the interface unit (15).

8. Device according to claim 7, **characterised in that** the ultrasound sensor (8), the interface unit (15), the second coupler (16) and the energy store (18) together form a transponder arranged in the work spindle and from which the measurement signal which is dependent on the position of the tool or tool carrier (2) with regard to the work spindle (1) can be read out by the measuring device (14) via the first coupler (17).

## Revendications

1. Dispositif servant à surveiller la position d'un outil ou d'un support d'outil (2) au niveau d'une broche de travail (1), en particulier dans une machine d'usinage, dans lequel la broche de travail (1) présente, au niveau de son côté frontal, une surface plane (4) servant à l'appui parallèle en plan d'une surface plane (5) de l'outil (2) ou du support d'outil (2) dans l'état serré de celui-ci et dans lequel est disposé dans la broche de travail (1) au moins un capteur, qui émet un signal de mesure dépendant de la position de l'outil ou du support d'outil (2) par rapport à la broche de travail (1), **caractérisé en ce que** le capteur est un capteur à ultrasons (8), qui est disposé à l'intérieur de la broche de travail (1) au niveau d'une surface (9) du corps de la broche de travail (1) et qui est mis au point pour injecter dans le corps de la broche de travail (1) un signal ultrasonore se propageant dans le corps de la broche de travail (1) en direction de la surface plane (4), recevoir depuis le corps de la broche de travail (1) un signal réfléchi et déduire du signal réfléchi le signal de mesure et l'envoyer à une sortie.

2. Dispositif selon la revendication 1, **caractérisé en ce que** la surface (9) du corps de la broche de travail (1) se situe à l'intérieur de la broche de travail (1), au niveau de laquelle le capteur à ultrasons (8) est disposé, de manière parallèle par rapport à la surface plane (4) au niveau du côté frontal de la broche de travail (1) pour l'appui de manière parallèle en plan d'une surface plane (5) de l'outil (2) ou du support d'outil (2) dans l'état serré de celui-ci.

3. Dispositif selon la revendication 1 ou 2, **caractérisé en ce qu'**il présente un système de mesure (14), qui évalue le signal de mesure émis par le capteur à ultrasons (8), qui évalue le caractère en bonne et due forme de l'installation d'outil à l'aide d'au moins un paramètre du signal de mesure et qui indique une défectuosité de l'installation d'outil.

4. Dispositif selon l'une quelconque des revendications 1 à 3, **caractérisé en ce que** le capteur à ultrasons (8) contient un système servant à mesurer le temps de propagation d'un signal ultrasonore qu'il a envoyé et qui lui revient par réflexion et le signal de mesure qu'il a fourni contient une information concernant le temps de propagation mesuré, et que le dispositif présente un système de mesure (14) avec un comparateur servant à comparer le temps de propagation à une valeur de seuil de temps, lequel indique la défectuosité d'une installation de l'outil ou du support d'outil (2) au niveau de la broche de travail (1) quand le temps de propagation est inférieur à une valeur de seuil de temps.

5. Dispositif selon l'une quelconque des revendications 1 à 4, **caractérisé en ce que** le capteur à ultrasons (8) contient un système servant à mesurer l'amplitude d'un signal ultrasonore qu'il a envoyé et qui lui revient par réflexion et le signal de mesure qu'il a fourni contient une information concernant l'amplitude mesurée, et que le dispositif présente un système de mesure (14)avec un comparateur servant à comparer l'amplitude à une valeur de seuil d'amplitude, lequel indique une défectuosité de l'installation de l'outil ou du support d'outil (2) au niveau de la broche de travail (1) quand l'amplitude est supérieure à la valeur de seuil d'amplitude.

6. Dispositif selon l'une quelconque des revendications 3 à 5, **caractérisé en ce que** le système de mesure (14) est disposé à l'extérieur de la broche de travail (1) et est relié à un premier coupleur (17), que le capteur à ultrasons (8) est relié à un deuxième coupleur (16) par l'intermédiaire d'une unité d'interface (15), et que le signal de mesure est transmis sans fil au-delà d'un entrefer (12) entre la broche de travail (1) et un stator (13) par le capteur à ultrasons (8) au premier coupleur (17) puis au système de mesure (14) par l'intermédiaire de l'unité d'interface (15) et du deuxième coupleur (16).

7. Dispositif selon la revendication 6, **caractérisé en ce qu'**est prévu dans la broche de travail un accumulateur d'énergie (18) servant à l'alimentation du capteur à ultrasons (8) et de l'unité d'interface (15), lequel peut être chargé à partir de l'énergie d'un signal transmis par le système de mesure (14) à l'unité d'interface (15) par l'intermédiaire des coupleurs (17, 16).

8. Dispositif selon la revendication 7, **caractérisé en ce que** le capteur à ultrasons (8), l'unité d'interface (15), le deuxième coupleur (16) et l'accumulateur d'énergie (18) forment globalement un transpondeur disposé dans la broche de travail, depuis lequel le signal de mesure dépendant de la position de l'outil ou du support d'outil (2) par rapport à la broche de travail (1) peut être lu par le système de mesure (14) par l'intermédiaire du premier coupleur (17) .
